## Europäisches Patentamt

## European Patent Office

## Office européen des brevets

(11) Veröffentlichungsnummer: **0 437 643 A1**

(12) # EUROPÄISCHE PATENTANMELDUNG

(21) Anmeldenummer: **90100686.6**

(22) Anmeldetag: **13.01.90**

(51) Int. Cl.5: **B26D 1/18**, //B26D5/14

(43) Veröffentlichungstag der Anmeldung:
**24.07.91 Patentblatt 91/30**

(84) Benannte Vertragsstaaten:
**AT BE CH DE DK ES FR GB GR IT LI LU NL SE**

(71) Anmelder: **Warnke, Kurt**
**Landstrasse 48**
**W-5657 Haan(DE)**

(72) Erfinder: **Warnke, Kurt**
**Landstrasse 48**
**W-5657 Haan(DE)**

(74) Vertreter: **Patentanwaltsbüro Cohausz &**
**Florack**
**Schumannstrasse 97**
**W-4000 Düsseldorf 1(DE)**

(54) **Schneidemaschine für Nahrungsmittel mit einem rotierenden Messer.**

(57) Die Erfindung betrifft eine Schneidemaschine für Nahrungsmittel als Schnittgut insbesondere für Brot, Kuchen, Fleisch, Wurst, Käse, u.ä., mit einem rotierenden Messer 5,5a und einem Vorschub für das Schnittgut, um dieses schrittweise nach jedem Schnitt um die gewünschte Scheibenstärke nach vorne zu fahren, wobei das Schnittgut während des Schneidvorgangs unbeweglich liegt, wobei das Messer 5,5a in Richtung rechtwinklig zu seiner Drehachse hin- und herfahrbar ist.

Fig. 1

EP 0 437 643 A1

Xerox Copy Centre

## SCHNEIDEMASCHINE FÜR NAHRUNGSMITTEL MIT EINEM ROTIERENDEN MESSER

Die Erfindung betrifft eine Schneidemaschine für Nahrungsmittel als Schnittgut insbesondere für Brot, Kuchen, Fleisch, Wurst, Käse, u.ä., mit einem rotierenden Messer und einem Vorschub für das Schnittgut, um dieses schrittweise nach jedem Schnitt um die gewünschte Scheibenstärke nach vorne zu fahren, wobei das Schnittgut während des Schneidvorgangs unbeweglich liegt.

Auf dem Markt gibt es verschiedene Schneidemaschinen, die sogenannten Aufschnittschneidemaschinen zum Schneiden von Brot usw. Diese Maschinen gibt es mit halb- aber auch mit vollautomatischen Vorschub. Alle diese Maschinen haben gemeinsam, daß das Schnittgut auf einem beweglichen Schlitten gegen das sich drehende Messer geschoben wird. Im Prinzip wird mit der rechten Hand geschoben, da der Motorblock für die Messeraufnahme sich links befindet. Bei Brot besteht der Nachteil, daß die Scheiben gebogen werden und - je nach Brotsorten - brechen können (Mandeln - oder Rosinenstuten).

Bei Maschinen mit automatischem Vorschub und Stapelvorrichtung wird das Brot seitenverkehrt gestapelt. Es kommt hinzu, daß die Abnahmeseite nicht genügend gegen Verletzungen gesichert ist, außerdem haben diese Maschinen nur einen sehr begrenzten Verstellbereich, im wesentlichen bis max. 20 mm.

Maschinen mit Rundmesser haben den Vorteil, auch empfindliches Schnittgut einwandfrei zu schneiden, wenn die Stücke nicht zu groß sind.

Außerdem gibt es zum Schneiden sogenannte Sichelmessermaschinen (sogenannte Schlagmessermaschinen). Diese Maschinen werden ausschließlich im gewerblichen Einsatz verwendet. Bei diesen Maschinen wird das Schnittgut (Brot usw.) durch ein abgesichertes Kanalsystem geschoben und durch das Sichelmesser in gleichmäßige Scheiben geschnitten. Das Schnittgut bleibt gleichmäßig liegen und kann nach Anheben der Sicherheitshaube am Auslaufkanal entnommen werden. Der Vorschub erfolgt im wesentlichen von der rechten Seite zur linken Seite. Das System ist bekannt und wir verweisen hier auf unsere eigenen Patente von 1981 und 1982. Der Nachteil bei diesen Maschinen ist, daß bedingt durch das Antriebssystem frisches Brot nur bedingt geschnitten werden kann, bzw. je nach Beschaffenheit des Brotes es nicht möglich ist, bestimmte Brotsorten zu schneiden. Es kommt hinzu, daß diese Maschinen für den Einsatz im Laden, z.B. für Unterbringung im Brotregal recht groß sind. In den letzten Jahren geht der Trend im Bäckerhandwerk z.B. dahin, im verstärkten Maße diese Universal-Frischbrotschneidemaschinen für den Kundenservice im Laden aufzustellen.

Aufgabe der Erfindung ist es, eine konstruktiv einfache, sicher arbeitende Schneidmaschine der eingangs genannten Art zu schaffen, die bei hoher Schnittleistung kleine Außenabmessungen aufweist und insbesondere bei sehr nachgiebigen Schnittgut saubere Scheiben geordnet in gleicher Form wie das ungeschnittene Schnittgut nebeneinander läßt.

Diese Aufgabe wird erfindungsgemäß dadurch gelöst, daß das Messer kreisförmig ist und in Richtung rechtwinklig zu seiner Drehachse hin- und herfahrbar ist.

Die Erfindung betrifft nun eine Maschine, die die Vorteile einer Rundmesserschneidemaschine mit denen einer Sichelmesserschneidemaschine verbindet. Die Maschinen sind grundsätzlich für den gewerblichen Einsatz gedacht. Die Maße dieser neuen Maschine sind mit einer Länge von 95 cm, Tiefe von 72 cm und Höhe von 52 cm bei gleichen Nutzmaßen der Brote gegenüber den Sichelmessermaschinen erheblich kleiner. Diese größeren Maße ergeben sich dadurch, daß das Sichelmesser eine drehende Kreisbewegung macht und daher bei entsprechender Nutzbreite und Nutzhöhe erheblich größer ist, während das Kreismesser bei einem Durchmesser von z.B. 33 cm lediglich eine Längsbewegung macht.

Besonders vorteilhaft ist es hierdurch, wenn der Schlitten oder Wagen durch eine Kurbel angetrieben ist. Hierdurch wird ein Antrieb für das Hin- und Herbewegen eines rotierenden Messers einer Schneidemaschine für Lebensmittel geschaffen, der bei einfacher und sicherer Konstruktion mit hoher Lebensdauer geringe Abmessungen aufweist und geringe Vibrationen erzeugt.

Ein solcher Antrieb besitzt eine hohe Funktionssicherheit bei geringem Verschleiß und einfacher Konstruktion.

Eine besonders einfache Konstruktion wird dann geschaffen, wenn der Antriebsmotor für das Messer auf dem Schlitten oder Wagen befestigt ist. Besonders vorteilhaft ist es, wenn der Schlitten oder Wagen auf einer Seite, insbesondere der Unterseite eine Führung, insbesondere Schiene trägt, auf der ein zweiter Schlitten oder Wagen sitzt, der quer zum ersten Schlitten oder Wagen hin- und herbeweglich ist, und daß die Kurbel an einem zweiten Schlitten oder Wagen angelenkt ist.

Eine besonders kleine Bauweise bei geringen Vibrationen wird dann erreicht, wenn der Kurbeldrehpunkt mittig zwischen den Schienen des (ersten) Schlittens oder Wagens liegt. Hierzu wird auch vorgeschlagen, daß die Kurbel von einer umlaufenden Platte gebildet ist, die parallel zu der Ebene liegt, in der die Führungen, insbesondere Schienen des (ersten) Schlittens oder Wagens liegen.

Von besonderem Vorteil ist es, wenn an dem (ersten) Schlitten oder Wagen zwei Führungsschlitten- oder -wagen befestigt sind, die auf Schienen laufen. Auch wird vorgeschlagen, daß das Messer kreisförmig ist. Besonders ein kreisförmiges Messer bedarf im Gegensatz zu einem sichelförmigen Messer einer Hin- und Herbewegung.

Weitere vorteilhafte Ausgestaltungen der Erfindung sind in den Unteransprüchen angeführt. Ausführungsbeispiele der Erfindung sind in den Zeichnungen dargestellt und werden im folgenden näher beschrieben. Es zeigen

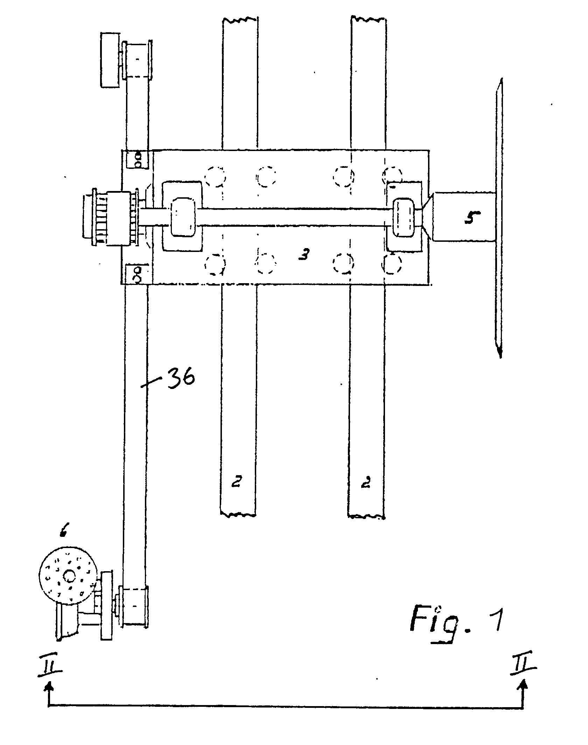

Figur 1 eine Draufsicht auf ein erstes Ausführungsbeispiel,

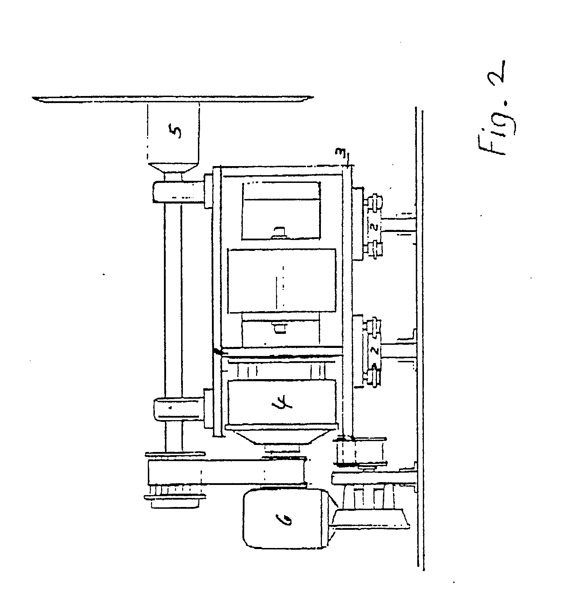

Figur 2 eine Seitenansicht nach II-II in Figur 1

Figur 3 eine Seitenansicht eines zweiten Ausführungsbeispiels,

Figur 4 eine Draufsicht auf das zweite Ausführungsbeispiel,

Figur 5 eine perspektivische Ansicht des zweiten Ausführungsbeispiels,

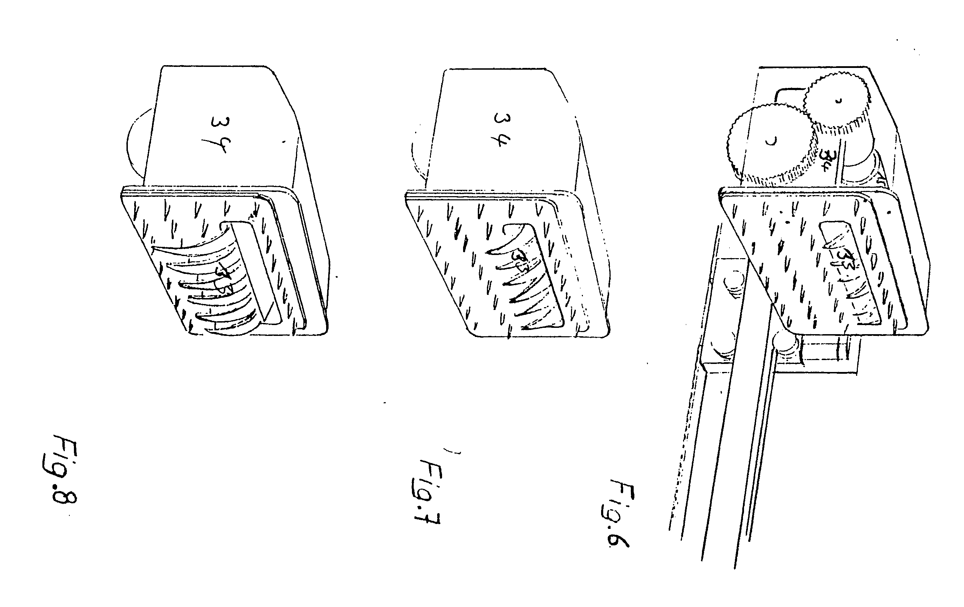

Figur 6 eine perspektivische Ansicht deiner Haltevorrichtung für das Schnittgut mit eingezogenen Klauen,

Figur 7 die Vorrichtung nach Figur 6 mit halb ausgefahrenen Klauen,

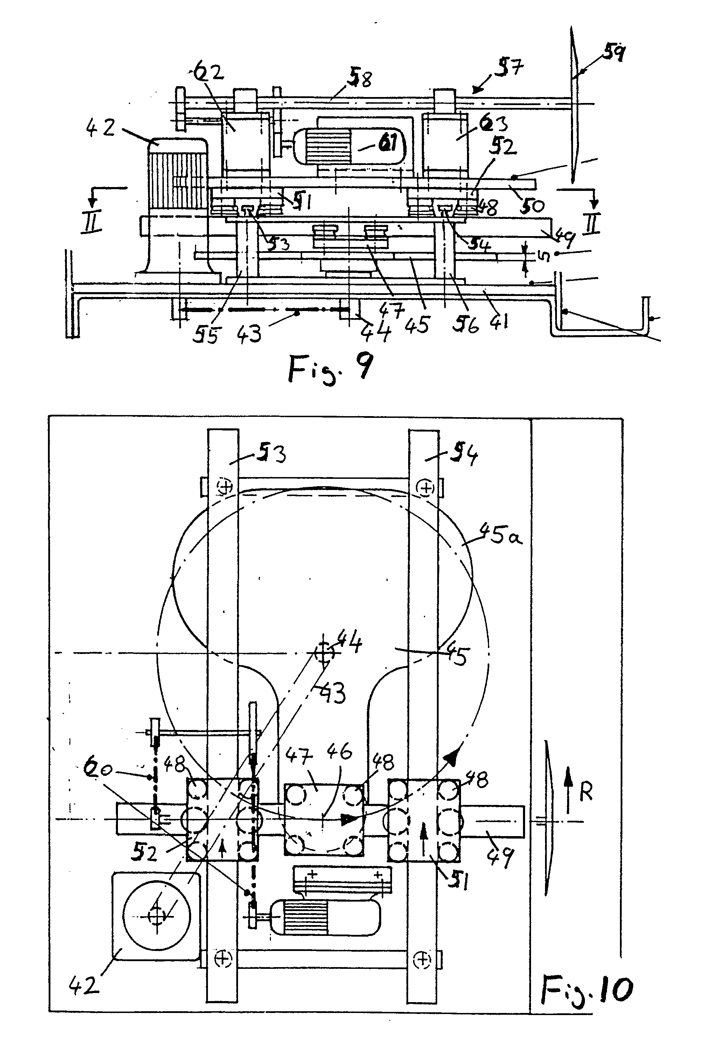

Figur 8 die Vorrichtung nach Figur 6 mit ganz ausgefahrenen Klauen,

Figur 9 eine Seitenansicht eines dritten Ausführungsbeispiels.

Figur 10 einen Schnitt nach II-II in Figur 10.

Im unteren Teil des Maschinengehäuses 1 ist eine doppelte Linearführung 2 (in Form von Schienen) auf der ein Transportschlitten, insbesondere Wagen 3 angebracht ist. Auf der Platte des Transportschlittens 3 befindet sich ein Motorblock z.B. für die Befestigung eines Bremsmotors 4 und für die Aufnahme eines Messers 5. Über einen getrennten Antrieb eines Getriebemotors 6 kann der Transportschlitten 3 hin- und herbewegt werden. Die Umschaltung erfolgt durch Endschalter 7 im vorderen und hinteren Bereich. Während der vordere Endschalter 7 ein reiner Umschalter ist, gibt der hintere Endschalter nach Erreichen des Endpunktes gleichzeitig den Befehl an die elektronische Steuerung, den Vorschubmotor 8 für die Schnittstärkeneinstellung in Funktion zu setzen.

Der Schieber für den Vorschub ist ebenfalls auf einer Linearführung 9 angebracht. Der Vorschubmotor 8 kann ein Schrittmotor als auch ein Getriebemotor sein, der über einen Drehgeber geregelt wird. Die Elektronik für die gesamte Steuerung, insbesondere aber auf für die Schnittstärken und Scheibenanzahleinstellung ist vorzugsweise mit einer Microprozessor ausgestattet

Im vorderen und hinteren Teil des Gehäuses befinden sich im Bereich der Linearführung 2 Stoßdämpfer 10, die den jeweiligen Gegendruck der Massenbewegung auffangen, um eine Standruhe des Gehäuses während des Schneidevorganges zu gewährleisten. Die mittlere Platte des Gehäuses zur Abgrenzung des Messerraumes ist mit einem Schlitz ausgestattet, in dem sich die Welle für die Messeraufnahme hin- und herbewegen kann.

Im hinteren Teil des Messerraumes 11 befinden sich rechts und links die sogenannten Ölkammern 12, ausgestattet mit Filz und Bürsten, um das Messer bei jedem Schneidevorgang zu beölen. Im hinteren Teil des Gehäuses befindet sich der Broteinlegekanal 13. Aus Sicherheitsgründen wird der Kanal durch eine vorzugsweise Kunststoffhaube abgesichert.

Im Einlaufkanal wird das Schnittgut durch eine Klaue 33 befestigt. Diese Befestigung kann manuell erfolgen aber auch in der Form, daß auf dem Schiebersystem 34 ein Getriebemotor 35 angebracht wird, der die Welle an der die Klaue angebracht ist antreibt.

Dieses geschieht in der Form, daß anstelle des Hebels, der die Klaue bei manueller Betätigung in Funktion setzt ein Zahnrad an die verlängerte Drehachse der Klaue 33 angebracht wird, welches wiederum mit dem Getriebemotor 35 verbunden wird. Die Betätigung der Klaue erfolgt dann über die Elektronik in Verbindung mit den Tasten der Folientastatur. Die Funktion sieht also folgendermaßen aus:

Nachdem das Schnittgut vor die Klaue gelegt wird und bei Abdeckhauben voll geschlossen sind, hält nach Betätigung des Tasters "vorwärts" die Klaue zunächst das Schnittgut fest und transportiert dieses dann nach vorne zum Schneiden.

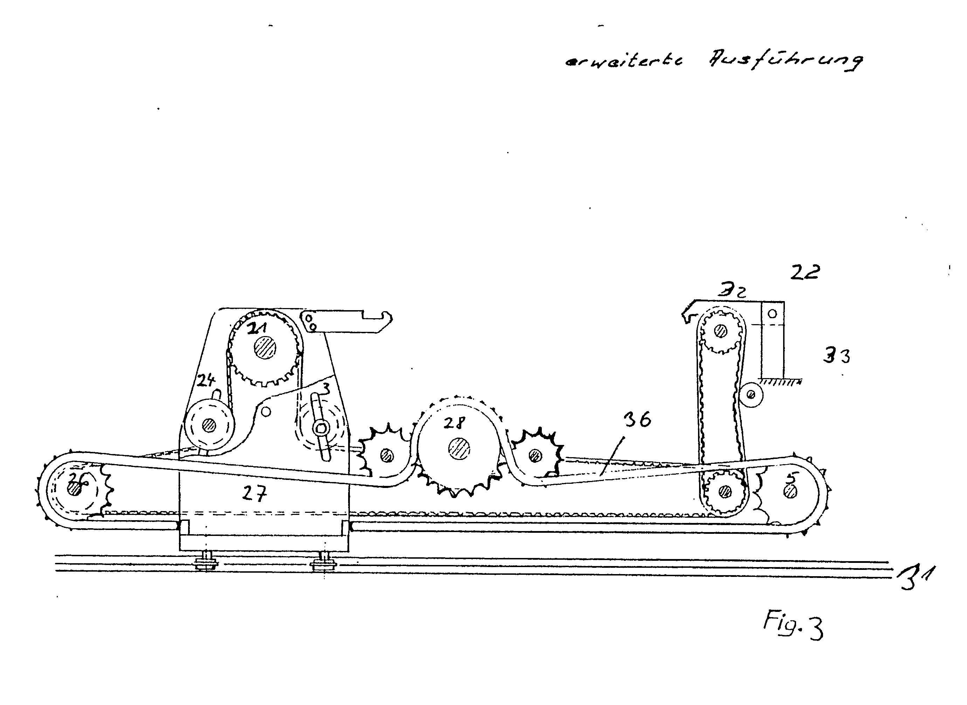

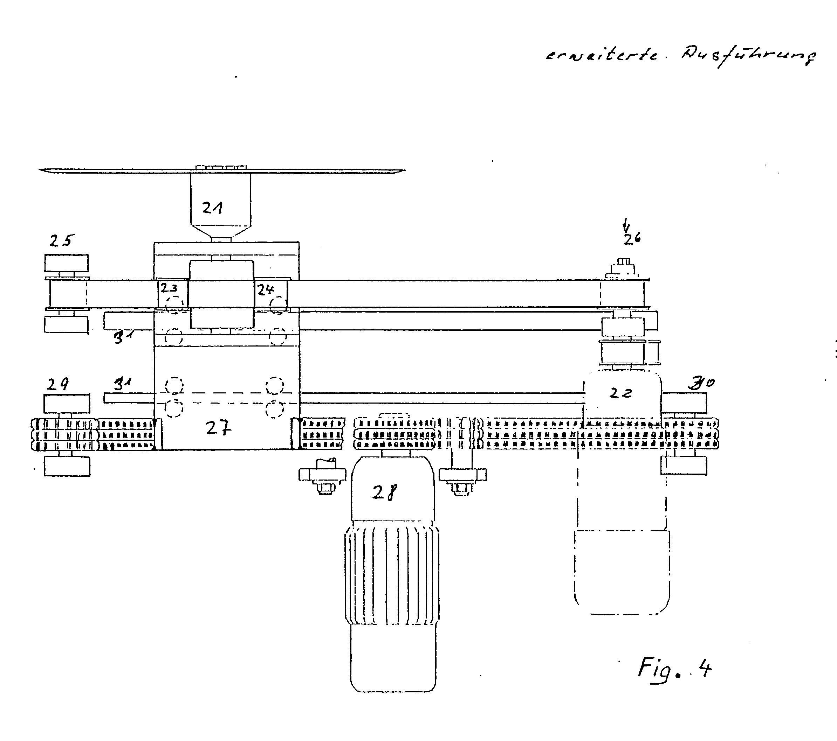

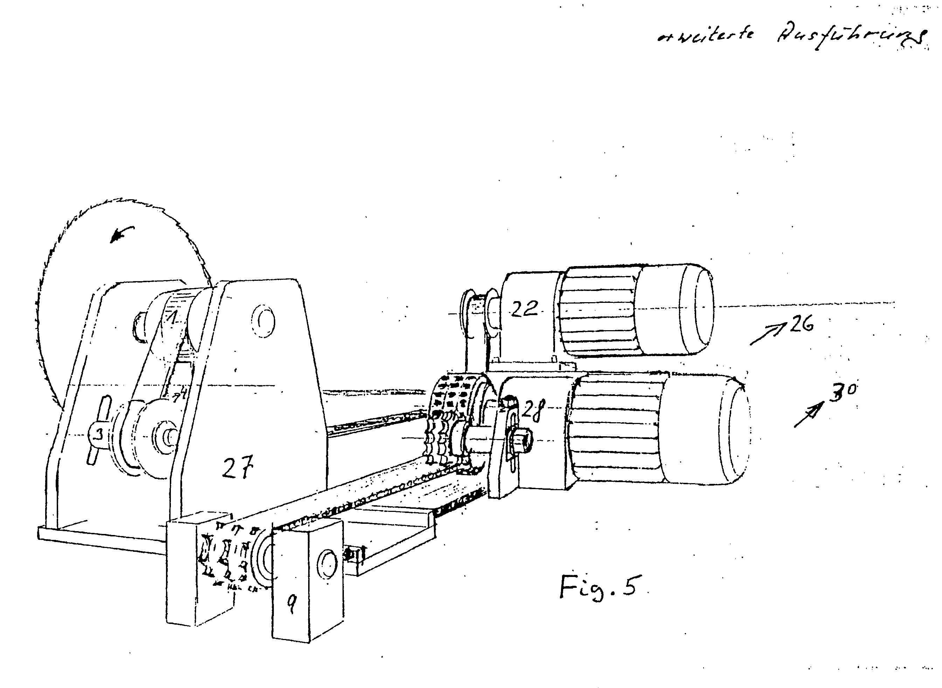

Im zweiten Ausführungsbeispiel nach den Figuren 3 bis 5 erfolgt der Antrieb der Messerwelle 21 mittels Kette oder Riemenantrieb 36 über einen Getriebemotor 22, der stationär angebracht ist. Der Kettenantrieb oder Riemenantrieb wird mittels Spanner 23 und 24 so verspannt, daß der größtmögliche Umschlingungswinkel erreicht wird. An den Endpunkten vorne und hinten befinden sich Umlenkrollen 25 und 26.

Die Drehrichtung Antrieb-Messerwelle erfolgt immer in einer Drehrichtung. Da beim Fahrschlitten 27 auf der Messerwelle Spanner angebracht sind, kann der Fahrschlitten 27 eine Vor- und Zurückbewegung ausführen bei stationär stehendem Antrieb der Messerwelle.

Der Fahrschlitten 27 wird in der Hin- und Herbewegung von einem separaten Getriebemotor 28 angetrieben. Eine Bewegung erfolgt mittels Kette oder Riemenantrieb mit seitlicher Umlenkung 29, 30.

Die Führung 31 des Schlittens besteht aus einer Linearführung (Schienen). In der jeweiligen Endstellung wird der Schlitten mittels Endschalter elektronisch in die gegenläufige Bewegungsrichtung umgeschaltet. Es erfolgt ein kontinuierlicher Schneidevorgang mit einer Hin- und Herbewegung des Schlittens, bei stationärem Messerantrieb und stationärem Antrieb des Fahrschlittens.

Durch die Massenbewegung des Messers (Zentrifugalkraft) versucht der Fahrschlitten auch in seiner hinteren Endstellung nach vorne zu laufen, auch bei ausgeschaltetem Fahrschlittenantrieb. Deshalb wird er mit einem beweglichen Raster 32 in der hinteren Endstellung festgehalten. Der Raster kann mit einem Hubmagnet 33, je nach Vorgabe des Schnittbefehls, wieder gelöst werden. Nach Beendigung des Schneidevorganges rastet er wieder ein und hält den Fahrschlitten am vorgegebenen Endpunkt wieder fest. Der seitliche Vorschub des Schneidgutes erfolgt über einen mikroprozessorgesteuerten Antrieb.

Im dritten Ausführungsbeispiel nach Figur 9 und 10 ist auf der Oberseite einer Grundplatte 41 senkrecht ein Motor 42 befestigt, dessen Antriebsachse sich durch die Platte 41 hindurcherstreckt und an der Unterseite der Platte vorsteht, um dort ein Kettenrad zu tragen, auf dem eine Kette 43 liegt die über ein zweites Kettenrad eine senkrechte Welle 44 antreibt. Die Welle 44 erstreckt sich wiederum durch die Platte 41 und trägt an ihrer Oberseite eine plattenförmige Kurbel 45, die parallel zur waagerechten Platte 41 und rechtwinklig zur Welle 44 liegt.

Die plattenförmige und umlaufende Kurbel 45 besitzt an ihrem äußeren Rand eine Anlenkstelle 46, mit der sie an einem Wagen 47 (zweiter Schlitten oder Wagen) angelenkt ist. Auf der der Anlenkstelle 46 zur Welle 44 diametral gegenüberliegenden Seite bildet die Kurbelplatte 45 eine Erweiterung 45a als Massenausgleich.

Der Wagen bzw. Schlitten 47 trägt an seiner Oberseite vier Rolle oder Räder 48, mit denen der Wagen 47 eine Schiene 49 beidseitig umgreift, um entlang dieser Schiene hin- und herfahren zu können.

Die Schiene 49 ist an der Unterseite einer waagerechten bzw. zur Kurbelplatte 45 parallelen Platte 50 durch Abstandteile in einem Abstand befestigt. Diese Abstandteile sind Führungsschlitten oder Führungswagen 51,52, die an der Unterseite der Platte 50 angeschraubt sind und auf Schienen 53,54 laufen, die auf Ständern 55,56 im Abstand auf der Platte 1 und parallel zueinander angeordnet sind. Die Wagen 51,52 umgreifen mit jeweils vier Rollen seitlich die Schienen 53,54.

Die Platte 50 bildet damit zusammen mit den darunter befestigten Wagen 51,52 einen ersten Hauptwagen oder Schlitten 57, der entlang den Schienen 53,54 waagerecht hin- und herbeweglich ist und durch die Kurbel 45 über den Wagen 47 und die Schiene 49 angetrieben wird. Auf der Oberseite der Platte 50 des Wagens 57 ist eine Welle 58 waagerecht und rechtwinklig zu den Schienen 53,54 gelagert, die an einem über den Wagen 57 seitlich hervorragenden Ende ein Rundmesser 59 trägt und über ein Getriebe 60 von einem Elektromotor 61 angetrieben ist, der zusammen mit dem Getriebe 60 und den Lagern 62, 63 für die Welle 58 auf der Platte 50 befestigt ist.

Durch den Kurbelantrieb wird das Rundmesser 59 in der Messerebene waagerecht hin- und herbewegt um ein Lebensmittel, insbesondere Brot in Scheiben zu schneiden. Nach jedem Schnittvorgang wird die Platte 41 quer zu den Schienen 53,54 jeweils um die Breite weiterbewegt, die der gewünschten Dicke der zu schneidenden Scheibe entspricht. Dieser zusätzliche Antrieb kann einen Schrittmotor enthalten und elektronisch geregelt sein. Ferner sind auch andere Messerformen einsetzbar. Die Wagen 47,51,52,57 können auch Schlitten sein, d.h., es können die Räder bzw. Rollen 48 fehlen und stattdessen Gleitlagerungen bestehen.

**Patentansprüche**

1. Schneidemaschine für Nahrungsmittel als Schnittgut insbesondere für Brot, Kuchen, Fleisch, Wurst, Käse, u.ä., mit einem rotierenden Messer (5,5a) und einem Vorschub für das Schnittgut, um dieses schrittweise nach jedem Schnitt um die gewünschte Scheibenstärke nach vorne zu fahren, wobei das Schnittgut während des Schneidvorgangs unbeweglich liegt, **dadurch gekennzeichnet**, daß das Messer (5,5a) in Richtung rechtwinklig zu seiner Drehachse hin- und herfahrbar ist.

2. Schneidemaschine nach Anspruch 1, **dadurch gekennzeichnet**, daß das Messer (5,5a) zusammen mit seinem Antriebsmotor (61) auf einem Wagen (3,57) oder Schlitten befestigt ist.

3. Schneidemaschine nach Anspruch 2, **dadurch gekennzeichnet**, daß der Wagen (3) und Schlitten durch ein Band (36), Kette, Seil oder Riemen, insbesondere Zahnriemen, hin- und herbewegbar ist.

4. Schneidemaschine nach Anspruch 3, **dadurch gekennzeichnet**, daß Band (36), Kette, Seil oder Riemen, insbesondere Zahnriemen, durch einen Elektrogetriebemotor (6) angetrieben sind.

5. Schneidemaschine nach Anspruch 4, **dadurch gekennzeichnet**, daß der Elektrogetriebemotor (6) ein Schrittmotor ist.

6. Schneidemaschine nach einem der vorherigen Ansprüche, **dadurch gekennzeichnet**, daß an beiden Wegenden des Wagens (3) oder Schlittens ein Stoßdämpfer befestigt ist.

7. Schneidemaschine nach Anspruch 6, **dadurch gekennzeichnet**, daß der Stoßdämpfer ein Gasdruckdämpfer ist.

8. Schneidemaschine nach einem der vorherigen Ansprüche, **dadurch gekennzeichnet**, daß an der Motorenwelle eine Elektrobremse befestigt ist.

9. Schneidemaschine nach einem der vorherigen Ansprüche, **dadurch gekennzeichnet**, daß das Messer (5,59) kreisförmig ist.

10. Schneidemaschine nach einem der Ansprüche 2 bis 9, **dadurch gekennzeichnet**, daß der Schlitten oder Wagen (57) durch eine Kurbel (45) angetrieben ist.

11. Antrieb nach einem der Ansprüche 1,2,6 bis 10, **dadurch gekennzeichnet**, daß der Schlitten oder Wagen (57) auf einer Seite, insbesondere der Unterseite eine Führung, insbesondere Schiene (49) trägt, auf der ein zweiter Schlitten oder Wagen (47) sitzt, der quer zum ersten Schlitten oder Wagen (57) hin- und herbeweglich ist, und daß die Kurbel (45) am zweiten Schlitten oder Wagen (47) angelenkt ist.

12. Antrieb nach Anspruch 10 oder 11, **dadurch gekennzeichnet**, daß der Kurbeldrehpunkt (44) mittig zwischen den Schienen (53,54) des (ersten) Schlittens oder Wagens (57) liegt.

13. Antrieb nach einem der Ansprüche 10 bis 12, **dadurch gekennzeichnet**, daß die Kurbel (45) von einer umlaufenden Platte gebildet ist, die parallel zu der Ebene liegt, in der die Führungen, insbesondere Schienen (53,54) des (ersten) Schlittens oder Wagens (57) liegen.

14. Antrieb nach einem der vorherigen Ansprüche, **dadurch gekennzeichnet**, daß an dem (ersten) Schlitten oder Wagen (57) zwei Führungsschlitten- oder -wagen (51,52) befestigt sind, die auf Schienen (53,54) laufen.

15. Antrieb nach Anspruch 13 oder 14, **dadurch gekennzeichnet**, daß die umlaufende Kurbelplatte (45) auf der der Anlenkstelle mit dem zweiten Schlitten oder Wagen (47) diametral gegenüberliegenden Seite eine Vergrößerung (45a) als Ausgleichsgewicht aufweist.

Fig. 1

Fig. 2

erweiterte Ausführung

Fig. 3

EP 0 437 643 A1

erweiterte. Ausführung

Fig. 4

Fig. 5

Fig.6

Fig.7

Fig.8

Fig. 9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-U-8 904 725 (WABÄMA)<br>* Das ganze Dokument *<br>--- | 1-9 | B 26 D 1/18 //<br>B 26 D 5/14 |
| X | GB-A- 420 382 (LAMBERT)<br>* Seite 2, Zeilen 99-107; Seite 3,<br>Zeilen 1-34; Figuren 1,2 * | 1,2 | |
| Y | <br>--- | 10-15 | |
| Y | CH-A- 447 770 (MEYRAT-LUISONI)<br>* Spalte 1, Zeilen 20-37; Spalte 2,<br>Zeilen 1-7; Figuren 1-3 *<br>--- | 10,11,<br>13,14 | |
| Y | CH-A- 84 972 (HABICHT)<br>* Das ganze Dokument *<br>--- | 12 | |
| Y | DE-B-1 213 594 (ROSE)<br>* Spalte 4, Zeilen 4-22; Figur 1 *<br>----- | 15 | |

| RECHERCHIERTE SACHGEBIETE (Int. Cl.5) |
|---|
| B 26 D<br>B 23 Q |

Der vorliegende Recherchenbericht wurde für alle Patentansprüche erstellt

| Recherchenort | Abschlußdatum der Recherche | Prüfer |
|---|---|---|
| DEN HAAG | 30-08-1990 | BERGHMANS H.F. |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes
Dokument

EPO FORM 1503 03.82 (P0403)